# EUROPÄISCHE PATENTSCHRIFT

(11) **EP 0 551 302 B1**
(45) Veröffentlichungstag und Bekanntmachung des Hinweises auf die Patenterteilung: **31.08.1994**
(21) Anmeldenummer: 91916314.7
(22) Anmeldetag: 21.09.1991
(51) Int. Cl.: B25F 5/02, H01M 2/10

(54) **EINRICHTUNG AN ELEKTRISCHEN HANDWERKZEUGMASCHINEN**
ELECTRICAL CONNECTOR FOR HAND TOOLS
DISPOSITIF POUR OUTILS ELECTRIQUES

(30) Priorität: 02.10.1990 DE 4031090
(43) Veröffentlichungstag der Anmeldung: 21.07.1993
(73) Patentinhaber: ROBERT BOSCH GMBH, 70442 Stuttgart (DE)
(72) Erfinder: BRUNS, Joachim, D-7061 Lichtenwald 1 (DE)
(86) Internationale Anmeldenummer: DE9100750
(87) Internationale Veröffentlichungsnummer: WO9205919

(56) Entgegenhaltungen:
- EP-A- 0 199 241
- EP-A- 0 255 568
- WO-A-88/02242
- DE-A- 3 742 268
- DE-A- 3 902 442

## Beschreibung

Die Erfindung geht aus von einer Einrichtung an elektrischen Handwerkzeugmaschinen zur mechanischen und elektrischen Ankoppelung von Batterien nach dem Oberbegriff des Anspruchs 1. Eine gattungsgemäße Einrichtung ist aus der DE-A-3742268 bekannt.
Die Erfindung betrifft außerdem ein Batteriegehäuse nach dem Oberbegriff des Anspruchs 7. Aus der DE-A-37 42 268 ist bereits ein Elektrowerkzeug mit einer Einrichtung zur Aufnahme und Halterung von Batteriepacks im und/oder am Werkzeuggehäuse bekannt, bei dem der Batteriepack mit dem Handwerkzeug mittels eines zusätzlichen Rings befestigbar ist. Sowohl das Elektrowerkzeug als auch der Batteriepack als auch der Ring sind dabei mit Schließelementen ausgestattet und zum Anschließen des Batteriepacks ist sowohl eine Steck- als auch eine Drehbewegung erforderlich. Hinzu kommt, daß sich der Benutzer vor dem Aufstecken des Batteriepacks vergewissern muß, daß der Ring sich in der richtigen Drehlage zum Elektrowerkzeug befindet. Fertigung und Bedienung dieser Koppeleinrichtung sind relativ aufwendig. Außerdem sind die Batteriekontakte offen an der Außenseite des Batteriepacks angeordnet, was zu Kurzschlüssen fuhren kann.

### Vorteile der Erfindung

Die erfindungsgemäße Einrichtung und das erfindungsgemäße Gehäuse mit den kennzeichnenden Merkmalen der unabhängigen Ansprüche 1 und 7 haben demgegenüber den Vorteil, daß der Anschluß der Batterien vereinfacht wird und die elektrischen Kontakte vor Berührung und Kurzschluß geschützt sind. Der Gegenstand der Erfindung erfordert keine Betätigungselemente an der Handwerkzeugmaschine und erfordert neben dem Halten des Gerätes nur eine einzige Hand beim Verbinden und Lösen des Batteriegehäuses. Um ein versehentliches Lösen zu vermeiden, kann der Drehbewegung eine Axialbewegung vorgeschaltet werden.

Durch die in den abhängigen Ansprüchen 2-6 bzw. 8-11 aufgeführten Maßnahmen sind vorteilhafte Weiterbildungen und Verbesserungen der in den unabhängigen Ansprüchen angegebenen Erfindung möglich. Besonders vorteilhaft ist es, daß an der Aufnahme der Handwerkzeugmaschine als unterschnittene Ausnehmungen ausgebildete Rastmittel angeordnet sind, die zur Einsteckseite hin kantig und in mindestens einer Umfangsrichtung ausgerundet oder abgeschrägt ausgebildet sind. Dies ermöglicht ein einfaches Einschnappen der Rastmittel beim axialen Einstecken des Batteriegehäuses in die Aufnahme und ein einfaches Lösen der Rastmittel durch Verdrehen des Batteriegehäuses gegenüber der Aufnahme. Unsymmetrisch am Umfang der Aufnahme verteilte koaxiale Nuten haben den Vorteil, daß das Batteriegehäuse nur in einer definierten Drehlage eingesteckt werden kann, so daß beispielsweise zusätzlich angeordnete einfache Kontaktflächen für eine Signalübertragung lagerichtig in Kontakt mit ihrer Gegenfläche kommen. Außerdem wird dadurch die dem Gerät entsprechende richtige Drehlage des in der Regel nicht kreisrunden Batteriegehäuses sichergestellt. Besonders vorteilhaft ist es auch, die Rastmittel entweder an der Aufnahme oder an dem Steckteil als elastische Klinken auszubilden, die in eine Hinterschneidung am jeweils anderen Teil der Einrichtung eingreifen. Die Verteilung der Rastmittel entsprechend der Verteilung der Nuten an der Aufnahme stellt auf einfache Weise und ohne zusätzliche Vorrichtung an dem Steckteil die korrekte Drehlage des Batteriegehäuses gegenüber der Handwerkzeugmaschine sicher. Die Anordnung der elektrischen Leistungskontakte jeweils innerhalb der Koppelungselemente schützt diese vor unbeabsichtigtem Berühren, was sonst entweder zur Korrosion oder auch zu einem Kurzschluß führen könnte. Dies ist besonders bei dem Batteriegehäuse wichtig, das von Benutzern gelegentlich unbedacht in Werkzeugkisten abgelegt wird.

### Zeichnung

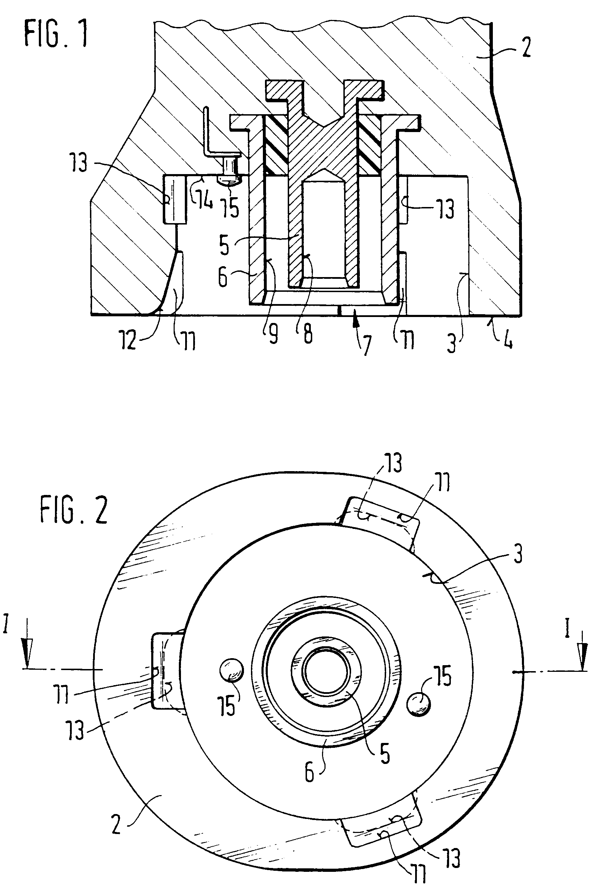

Ein Ausführungsbeispiel ist in der Zeichnung dargestellt und in der nachfolgenden Beschreibung näher erläutert. Figur 1 zeigt einen Querschnitt durch eine Aufnahme einer Handwerkzeugmaschine. Figur 2 zeigt eine Draufsicht auf diese Aufnahme, Figur 3 zeigt ein Batteriegehäuse mit Steckteil und Figur 4 eine Draufsicht auf das Steckteil.

### Beschreibung des Ausführungsbeispiels

An einem Gehäuse 2 einer Handwerkzeugmaschine, das nur ausschnittweise gezeigt ist, ist eine becherförmig sich in das Gehäuse 2 hineinstreckende Aufnahme 3 mit nach außen weisender Stirnfläche 4 angeordnet, die einen im wesentlichen kreisrunden Querschnitt aufweist. Innerhalb der Aufnahme 3 befinden sich konzentrisch eine innere Hülse 5 und eine äußere Hülse 6, die beide gegenüber der Stirnfläche 4 zurückversetzt sind. Die Hülsen 5 und 6 bilden eine Doppelbuchse 7 mit elektrischen Leistungskontakten 8 und 9. Zu diesem Zweck können die Hülsen 5, 6 entweder als Metallhülsen ausgebildet sein oder auf ihrer Innenseite mit Metallflächen belegt sein. Die Leistungskontakte 8, 9 stehen mit einem nicht gezeigten Antriebsmotor der Handwerkzeugmaschine in elektrischer Verbindung.

Die Aufnahme 3 hat asymmetrisch an ihrem Umfang verteilt drei koaxiale Nuten 11. Zur Stirnseite 4 hin sind die Nuten 11 durch Einführschrägen 12 erweitert. An dem der Stirnseite 4 abgewandten inneren Ende der Nuten 11 sind jeweils hinterschnittene Ausnehmungen 13 angeordnet, die zur Stirnseite 4 also zur Einsteckseite hin kantig und in Umfangsrichtung beidseitig ausgerundet sind. Auf einer Grundfläche 14 der Aufnahme 3 sind asymmetrisch zwei pilzförmige Kontaktflächen 15 zur Signalübertragung angeordnet.

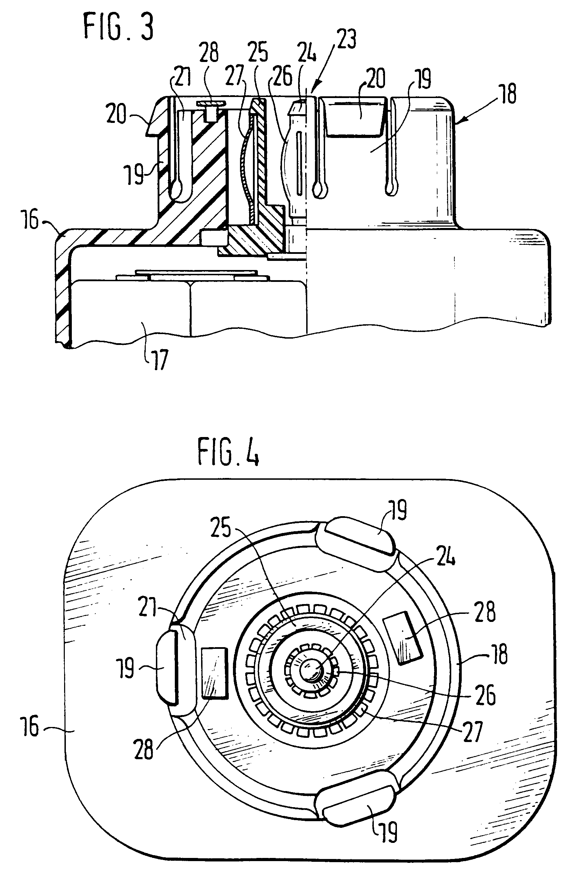

Das in Figur 3 ausschnittsweise gezeigte Gehäuse 16, in dem vorzugsweise wiederaufladbare Batterien 17 untergebracht sind, hat zur Verbindung mit der Handwerkzeugmaschine ein im wesentlichen kreisrundes Steckteil 18. Aus dem kreisrunden Umfang herausragend sind asymmetrisch entsprechend zu den Nuten 11 drei als elastische Klinken ausgebildete Rastmittel 19 ausgebildet. Die Klinken 19 weisen je einen Vorsprung 20 auf, der bei Einschieben in die Aufnahme 3 in die von den Ausnehmungen 13 gebildeten Hinterschneidungen eingreifen. Hinter den Klinken 19 ist ein Hohlraum 21 ausgebildet, so daß die Klinken 19 zur Mitte des Steckteils 18 hin zurückfedern können. Zentrisch in dem Steckteil 18 ist ein konzentrischer Doppelstecker 23 mit einem inneren Steckerstift 24 und einer darum herum beabstandet geordneten Steckerhülse 25. Die beiden Steckerteile 24, 25 haben jeweils an ihrem Außenumfang je einen kranzförmigen federnden Leistungskontakt 26, 27, die mit den Batterien 17 verbunden sind. Die Leistungskontakte 26, 27 sind verdeckt innerhalb des Doppelsteckers 23 beziehungsweise des Steckteils 18 untergebracht, so daß sie mit den Fingern nicht berührt werden können; zu diesem Zweck enden sie bereits vor der Spitze des Steckerstifts 24 beziehungsweise der Steckerhülse 25 und werden in diesem Bereich axial überdeckt. Zwischen dem Doppelstecker 23 und dem Außenumfang des Steckteils 18 sind den Kontaktflächen 15 gegenüberliegende Kontaktflächen 28, die federnd ausgebildet sein können, angeordnet. Diese Kontaktflächen dienen der Signalübertragung, zum Beispiel der Temperaturüberwachung der wiederaufladbaren Batterien 17.

Die Handhabung der Steckeinrichtung ist äußerst einfach. Das Batteriegehäuse 16 wird mit einer Hand ergriffen und entsprechend der Lage der Klinken 19 und der Nuten 11 einfach in axialer Richtung in die Aufnahme 3 eingesteckt. Die Klinken 19 werden dabei entlang den Einführschrägen 12 nach innen gedrückt und schnappen anschließend selbstätig in die Ausnehmungen 13 ein. Mit dem Einstecken sind gleichzeitig die Leistungskontakte 8, 9 und 26, 27 miteinander verbunden. Ebenso kommen, sofern erforderlich, die Kontaktflächen 15 und 29 miteinander in leitende Berührung. Das Gehäuse 16 ist somit mechanisch und elektrisch zuverlässig mit dem Gehäuse 2 der Handwerkzeugmaschine verbunden. Zum Lösen des Batteriegehäuses 16 wird dieses um ca. 30 Grad nach rechts oder links verdreht. Dabei gleiten die Klinken 19 mit ihren abgerundeten Kanten entlang der ausgerundeten Ränder der Ausnehmungen 13 und werden dabei nach innen gebogen, bis sie vollständig aus den Ausnehmungen 13 herausgetreten sind. Die konzentrische Anordnung der Leistungskontakte steht einer Drehung des Batteriegehäuses 16 nicht im Wege. Bei ausgerasteten Klinken 19 läßt sich das Batteriegehäuse 16 leicht durch axiales Herausziehen aus der Handwerkzeugmaschine lösen.

Um ein versehentliches Lösen des Batteriegehäuses 16 zu verhindern, kann die Drehbewegung des Gehäuses in der Normallage auch durch entsprechende Mittel, zum Beispiel durch in diesem Bereich scharfkantige Ränder der Ausnehmungen 13 und/oder scharfkantige Seitenkanten der Klinken 19 verhindert sein. Dann ist zum Lösen der Rastverbindungen zunächst ein axialer Druck in Richtung auf die Aufnahme 3 hin notwendig, so daß die Klinken 19 in den Bereich von nicht gezeigten ausgerundeten Rändern der Ausnehmung 13 gelangen. In dieser Stellung ist nun wieder ein Lösen der Rastverbindung wie im gezeigten Ausführungsbeispiel möglich, wobei gegebenenfalls die scharfkantigen Kanten der Klinken 19 über die ausgerundeten Räder der Ausnehmung 13 gleiten.

## Patentansprüche

1. Einrichtung an elektrischen Handwerkzeugmaschinen (2) zur mechanischen und elektrischen Ankoppelung von Batterien (17) mit einer Aufnahme (3), die im wesentlichen kreisrunden Querschnitt aufweist, dadurch gekennzeichnet, daß innerhalb der Aufnahme (3) eine Doppelbuchse (7) mit konzentrisch angeordneten elektrischen Leistungskontakten (8, 9), denen korrespondierende elektrische Leistungskontakte (26, 27) an einem Batteriegehäuse (16) zugeordnet sind, und Rastmittel (13) angeordnet sind zur lösbaren mechanischen Befestigung des Batteriegehäuses (16) und daß das Batteriegehäuse (16) in der Aufnahme (3) drehbar ist.

2. Einrichtung nach Anspruch 1, dadurch gekennzeichnet, daß das Batteriegehäuse (16) durch axiales Einstecken mit der Aufnahme (3) verbindbar ist, wobei die Rastmittel (13) selbsttätig einrasten.

3. Einrichtung nach einem der vorhergehenden Ansprüche 1 oder 2, dadurch gekennzeichnet, daß die Rastmittel (13) als Ausnehmungen (13) ausgebildet sind, denen in Einsteckrichtung Einführschrägen (12) vorgelagert sind.

4. Einrichtung nach Anspruch 3, dadurch gekennzeichnet, daß die Ausnehmungen (13) zur Einsteckseite hin kantig und in mindestens einer Umfangsrichtung ausgerundet oder abgeschrägt ausgebildet sind.

5. Einrichtung nach einem der vorhergehenden Ansprüche, dadurch gekennzeichnet, daß die Aufnahme (3) unsymmetrisch am Umfang verteilte koaxiale Nuten (11) aufweist.

6. Einrichtung nach einem der vorhergehenden Ansprüche, dadurch gekennzeichnet, daß die Aufnahme (3) nichtkonzentrisch angeordnete Kontaktflächen (15) für eine Signalübertragung aufweist.

7. Gehäuse (16) für insbesondere wiederaufladbare Batterien (17) zur mechanischen und elektrischen Ankoppelung an elektrische Handwerkzeugmaschinen (2), die eine Buchse gemäß einem der vorhergehenden Ansprüche aufweisen, mit einem im wesentlichen kreisrunden Steckteil (18), dadurch gekennzeichnet, daß in dem Steckteil (18) ein Doppelstecker (23) mit konzentrisch angeordneten elektrischen Leistungskontakten (26, 27), die mit den Batterien (17) verbunden sind, und Rastmittel (19) zur Befestigung des Gehäuses (16) an der Handwerkzeugmaschine angebracht sind.

8. Gehäuse nach Anspruch 7, dadurch gekennzeichnet, daß die Rastmittel (19) als elastische Klinken ausgebildet sind, die in eine hinterschnittene Ausnehmung (13) an der Aufnahme (3) der Handwerkzeugmaschine eingreifen.

9. Gehäuse nach einem der vorhergehenden Ansprüche 7 oder 8, dadurch gekennzeichnet, daß die Rastmittel (19) über den Umfang des Steckteils (18) hervorstehen und in die unsymmetrisch am Umfang verteilten Nuten (11) der Aufnahme (3) einführbar sind.

10. Gehäuse nach einem der vorhergehenden Ansprüche 7 bis 9, dadurch gekennzeichnet, daß die Leistungskontakte (26, 27) verdeckt innerhalb des Steckteils (18) angeordnet sind.

11. Gehäuse nach einem der vorhergehenden Ansprüche 7 bis 10, dadurch gekennzeichnet, daß das Steckteil (18) nicht konzentrisch angeordnete Kontaktflächen (28) für eine Signalübertragung aufweist.

## Claims

1. Device on electric hand tools (2) for mechanically and electrically coupling batteries (17), having a receiver (3) which is substantially circular in cross-section, characterized in that disposed inside the receiver (3) are a double socket (7) with concentrically disposed electric power contacts (8, 9), with which corresponding electric power contacts (26, 27) on a battery housing (16) are associated, and detent means (13) for detachable mechanical fastening of the battery housing (16) and that the battery housing (16) is rotatable in the receiver (3).

2. Device according to claim 1, characterized in that the battery housing (16) may be connected to the receiver (3) by axial insertion, with the detent means (13) latching automatically.

3. Device according to one of the preceding claims 1 or 2, characterized in that the detent means (13) take the form of recesses (13), in front of which in insertion direction lead-in bevels (12) are provided.

4. Device according to claim 3, characterized in that the recesses (13) are edged towards the insertion side and are rounded off or chamfered in at least one peripheral direction.

5. Device according to one of the preceding claims, characterized in that the receiver (3) has coaxial grooves (11) distributed asymmetrically on the periphery.

6. Device according to one of the preceding claims, characterized in that the receiver (3) has non-concentrically disposed contact surfaces (15) for a signal transmission.

7. Housing (16) for, in particular, rechargeable batteries (17) for mechanical and electrical coupling to electric hand tools (2) which have a socket according to one of the preceding claims, having a substantially circular male connector (18), characterized in that provided in the male connector (18) are a double connector (23) with concentrically disposed electric power contacts (26, 27), which are connected to the batteries (17), and detent means (19) for fastening the housing (16) to the hand tool.

8. Housing according to claim 7, characterized in that the detent means (19) take the form of elastic pawls, which engage into an undercut recess (13) in the receiver (3) of the hand tool.

9. Housing according to one of the preceding claims 7 or 8, characterized in that the detent means (19) project beyond the periphery of the male connector (18) and may be introduced into the grooves (11) asymmetrically distributed on the periphery of the receiver (3).

10. Housing according to one of the preceding claims 7 to 9, characterized in that the power contacts (26, 27) are disposed in a concealed manner inside the male connector (18).

11. Housing according to one of the preceding claims 7 to 10, characterized in that the male connector (18) has non-concentrically disposed contact surfaces (28) for a signal transmission.

## Revendications

1. Dispositif de liaison mécanique et électrique de batteries (17) pour des outils électriques (2), comprenant un logement (3) de section essentiellement circulaire, caractérisé en ce qu'à l'intérieur du logement (3) se trouve une double douille (7) à contacts de puissance (8, 9), électriques,disposée concentriquement et dont les contacts de puissance (26, 27) électriques correspondants sont prévus sur un boîtier à batterie (16), ainsi que des moyens d'accrochage (13) pour la fixation mécanique détachable du boîtier à batterie (16), le boîtier à batterie (16) pouvant tourner dans le logement (3).

2. Dispositif selon la revendication 1, caractérisé en ce que le boîtier à batterie (16) se relie par engagement axial dans le logement (3), les moyens d'encliquetage (13) s'accrochant automatiquement.

3. Installation selon l'une des revendications précédentes, 1 ou 2, caractérisée en ce que les moyens d'encliquetage (13) sont en forme de cavités (13) précédées dans le sens de l'engagement par des rampes d'introduction (12).

4. Dispositif selon la revendication 3, caractérisé en ce que les cavités (13) présentent des arêtes du côté de l'engagement et sont arrondies ou présentent une surface en forme de rampe dans au moins une direction périphérique.

5. Dispositif selon l'une des revendications précédentes, caractérisé en ce que le logement (3) comporte des rainures (11) coaxiales, réparties de manière asymétrique sur sa périphérie.

6. Dispositif selon l'une des revendications précédentes, caractérisé en ce que le logement (3) comporte des surfaces de contacts (15), non concentriques, pour une transmission de signaux.

7. Boîtier (16), notamment pour des batteries rechargeables (17), destiné à être relié mécaniquement et électriquement à des outils électriques (2), ce boîtier comportant une douille selon l'une des revendications précédentes, avec une partie d'enfichage (18) essentiellement circulaire, boîtier caractérisé en ce que dans la partie d'enfichage (18) il y a une double fiche (23) à contacts de puissance (26, 27) électriques, concentriques, et qui sont reliés à la batterie (17) et des moyens d'accrochage (19) pour fixer le boîtier (16) sur l'outil.

8. Boîtier selon la revendication 7, caractérisé en ce que les moyens d'encliquetage (19) sont des lames élastiques qui s'accrochent dans une cavité à contredépouille (13) du logement (3) de l'outil.

9. Boîtier selon l'une des revendications précédentes 7 ou 8, caractérisé en ce que les moyens d'accrochage (19) sont en saillie par rapport à la périphérie de la partie enfichable (18) et s'introduisent dans des rainures (11) réparties de manière asymétrique à la périphérie du logement (3).

10. Boîtier selon l'une des revendications précédentes 7 à 9, caractérisé en ce que les contacts de puissance (26, 27) sont prévus cachés à l'intérieur de la partie d'enfichage (18).

11. Boîtier selon l'une des revendications précédentes 7 à 10, caractérisé en ce que la partie d'enfichage (18) comporte des surfaces de contacts (18) non concentriques pour une transmission de signaux.
